# EUROPÄISCHE PATENTSCHRIFT

(11) **EP 3 430 771 B1**
(45) Veröffentlichungstag und Bekanntmachung des Hinweises auf die Patenterteilung: **04.05.2022**
(21) Anmeldenummer: 17713905.2
(22) Anmeldetag: 17.03.2017
(51) Int. Cl.: H04L 12/40

(54) **MASKIERUNG DES EINFLUSSES NICHTUNTERSTÜTZTER FELDBUSKOMMANDOS**
MASKING THE INFLUENCE OF UNSUPPORTED FIELDBUS COMMANDS
MASQUAGE DE L'INFLUENCE DE COMMANDES DE BUS DE TERRAIN NON PRISES EN CHARGE

(30) Priorität: 18.03.2016 DE 102016105136
(43) Veröffentlichungstag der Anmeldung: 23.01.2019
(73) Patentinhaber: ABB Schweiz AG, 5400 Baden (CH)
(72) Erfinder: WAGENER, Dirk, 31655 Stadthagen (DE); WELTE, Christoph, 89233 Neu-Ulm (DE); HEEGE, Marcus, 56759 Kaisersesch (DE); MAHNKE, Wolfgang, 67310 Hettenleidelheim (DE); SCHLÜTER, Marko, 32339 Espelkamp (DE)
(74) Vertreter: Maiwald Patent- und Rechtsanwaltsgesellschaft mbH
(86) Internationale Anmeldenummer: PCT/EP2017/056468
(87) Internationale Veröffentlichungsnummer: WO 2017/158197

(56) Entgegenhaltungen:
- EP-A2- 2 913 735
- WO-A1-2011/057964
- DE-A1-102010 021 640
- DE-A1-102013 106 954

## Beschreibung

Die Erfindung betrifft ein Steuerungs- oder Testsystem für ein Feldgerät, ein Verfahren zum Betreiben desselben sowie ein Computerprogrammprodukt.

### Stand der Technik

Feldgeräte für Industrieanlagen sind in der Regel an einen Feldbus angeschlossen, so dass sie über ein Feldbusprotokoll Kommandos von einem Steuerungssystem empfangen können. Um die Anbindung an das Steuersystem zu erleichtern, wird vom Hersteller des Feldgeräts vielfach eine elektronische Gerätebeschreibung mitgeliefert, die die verfügbaren Kommandos und Parameter sowie optional auch Vorgaben für die Geschäftslogik und/oder für die Benutzerschnittstelle enthält.

Einige Feldbusprotokolle beinhalten bereits eine mehr oder weniger weitgehende geräte- und herstellerübergreifende Standardisierung. So kann der Standard des Feldbusprotokolls beispielsweise einen Satz Kommandos vorschreiben, die von einem standardkonformen Feldgerät zwingend unterstützt werden müssen. Der Standard kann auch einen weiteren Satz Kommandos definieren, die in ihrer Funktion und Syntax festgeschrieben sind, jedoch nicht zwingend von jedem standardkonformen Feldgerät unterstützt werden müssen. Aus diesen zwingend zu unterstützenden sowie optional zu unterstützenden, ansonsten aber vereinheitlichten Kommandos lässt sich eine generische Gerätebeschreibung formulieren, mit der die meisten standardkonformen Feldgeräte in Betrieb genommen werden können.

Wird für ein Feldgerät eine derartige generische Gerätebeschreibung genutzt, oder kommt eine andere nicht vom Hersteller des Feldgeräts stammende Gerätebeschreibung zum Einsatz, so kann der Fall eintreten, dass ein dort definiertes optional zu unterstützendes Kommando von dem Feldgerät nicht unterstützt wird. Das Feldgerät beantwortet ein derartiges Kommando mit einer Fehlermeldung. In einer Industrieanlage mit vielen Feldgeräten summieren sich derartige unwichtige Fehlermeldungen zu einem Rauschpegel, in dem wichtige Fehlermeldungen untergehen können. Die Übersicht über den Status der Feldgeräte in der Industrieanlage wird dadurch beeinträchtigt.

In der DE 10 2013 106 954 A1 sind ein Verfahren zur Fehlerüberwachung, eine Steuer- und Datenübertragungsanlage und eine Steuereinrichtung zur redundanten Prozessteuerung beschrieben, bei der Fehlerinformationen zwischen redundanten Steuereinrichtungen ausgetauscht werden, so dass insbesondere bei entfernt voneinander angeordneten Steuereinrichtungen auf beiden Steuereinrichtungen die Fehlerinformationen sowohl der jeweils lokalen als auch der entfernten Steuereinrichtung verfügbar sind, und somit zur Diagnose des gesamten Redundanzsystems jeweils lokal die Fehlerhistorie beider Steuereinrichtungen zur Verfügung steht.

### Aufgabe und Lösung

Es ist daher die Aufgabe der Erfindung, die Übersicht über den Status von Feldgeräten in einer Industrieanlage zu verbessern.

Diese Aufgabe wird erfindungsgemäß gelöst, wie in den unabhängigen Ansprüchen 1 (Vorrichtung), 9 (Verfahren) und 10 (Computerprogramm) angegeben.

Ausgestaltungen ergeben sich aus den darauf rückbezogenen Unteransprüchen.

### Gegenstand der Erfindung

Im Rahmen der Erfindung wurde ein Steuerungs- oder Testsystem für ein Feldgerät entwickelt. Dieses System umfasst eine Vermittlungseinheit zur bidirektionalen Kommunikation mit dem Feldgerät über ein Feldbusprotokoll. Weiterhin ist ein Befehlsspeicher vorgesehen, der zur Aufnahme von über das Feldbusprotokoll zum Feldgerät übertragbaren Kommandos ausgebildet ist.

Erfindungsgemäß ist zusätzlich ein Maskierungsspeicher vorgesehen, der zur Aufnahme derjenigen im Befehlsspeicher enthaltenen Kommandos, die vom Feldgerät nicht unterstützt werden, und/oder zur Aufnahme einer vom Feldgerät in Reaktion auf ein derartiges Kommando zurückgemeldeten Fehlermeldung, ausgebildet ist.

Es wurde erkannt, dass mit der im Maskierungsspeicher enthaltenen zusätzlichen Information das Auftreten von Fehlern infolge nicht unterstützter Kommandos verhindert werden kann. Alternativ oder auch in Kombination hierzu kann die nachteilige Wirkung derartiger Fehler auf die Übersicht über den Gerätestatus innerhalb der Industrieanlage reduziert werden. Wird beispielsweise bewusst vermieden, nicht unterstützte Kommandos an Feldgeräte zu senden, so treten Fehler erst gar nicht auf. Werden Fehler im Nachhinein daraufhin geprüft, ob sie vom Senden eines nicht unterstützten Kommandos an ein Feldgerät herrühren, können Fehlermeldungen entsprechend klassifiziert werden, so dass die Übersicht über den Gerätestatus nicht leidet.

Das Ergebnis ist in beiden Fällen, dass generische oder andere nicht vom Hersteller des Feldgeräts stammende Gerätebeschreibungen genutzt werden können, ohne dass dies mit dem Nachteil eines hohen Rauschpegels von Fehlermeldungen in der Industrieanlage erkauft werden muss. Insbesondere wird es in dieser Hinsicht praktikabel, für eine große Anzahl von Feldgeräten eine einheitliche, generische Gerätebeschreibung zu nutzen. Es ist dann nur noch diese eine Gerätebeschreibung zu pflegen und nicht eine Gerätebeschreibung pro Gerätetyp und Hersteller.

Für diese Wirkung ist es unerheblich, aus welcher konkreten Quelle die Informationen im Befehlsspeicher und im Maskierungsspeicher jeweils stammen. Beide Speicher können beispielsweise bereits mit der jeweiligen Information vorbelegt sein. Alternativ oder auch in Kombination hierzu kann das Steuerungs- oder Testsystem dazu ausgebildet sein, die Informationen für den Befehlsspeicher und den Maskierungsspeicher aktiv zu ermitteln.

Insbesondere kann ein Steuerungssystem mit einem Testsystem dahingehend zusammenwirken, dass mit dem Testsystem zunächst die Informationen für den Befehlsspeicher und/oder den Maskierungsspeicher des Testsystems aktiv ermittelt werden, um diese Informationen im nächsten Schritt in den Befehlsspeicher, bzw. in den Maskierungsspeicher, des Steuerungssystems zu übertragen.

Vorteilhaft ist ein Parser vorgesehen, der dazu ausgebildet ist, die zum Feldgerät übertragbaren Kommandos aus einer Gerätebeschreibung zu extrahieren und im Befehlsspeicher zu hinterlegen. Diese Gerätebeschreibung muss nicht speziell für das konkrete Feldgerät vorgesehen sein, sondern kann insbesondere eine generische Gerätebeschreibung sein. Die Gerätebeschreibung kann insbesondere eine Obermenge der vom Feldgerät unterstützten Kommandos beinhalten. Sie muss jedoch nicht zwingend alle vom Feldgerät unterstützten Kommandos beinhalten. Fehlt ein vom Feldgerät unterstütztes Kommando in der Gerätebeschreibung, bewirkt dies keinen Fehler, sondern führt lediglich dazu, dass die entsprechende Funktion des Feldgeräts brachliegt.

In einer besonders vorteilhaften Ausgestaltung der Erfindung ist zusätzlich eine Analyseeinheit vorgesehen, die dazu ausgebildet ist, im Befehlsspeicher hinterlegte Kommandos über das Feldbusprotokoll an das Feldgerät zu senden und bei Erhalt einer Fehlermeldung vom Feldgerät das Kommando als vom Feldgerät nicht unterstütztes Kommando im Maskierungsspeicher zu hinterlegen. Alternativ oder auch in Kombination kann die Analyseeinheit dazu ausgebildet sein, bei Erhalt einer Fehlermeldung die Fehlermeldung selbst im Maskierungsspeicher zu hinterlegen.

Es kann also beispielsweise eine initiale Verbindung zu dem Feldgerät hergestellt werden, um sukzessive alle Kommandos aus dem Befehlsspeicher dahingehend zu testen, ob sie fehlerfrei funktionieren. Dabei kann der Befehlsspeicher insbesondere einen Satz Kommandos enthalten, der aus einer generischen, nicht speziell für das konkrete Feldgerät abgefassten, Gerätebeschreibung gewonnen wurde. Die Gerätebeschreibung kann sogar so allgemein sein, dass sie sich auf Geräte mit komplett unterschiedlichen Funktionen bezieht. Beispielsweise kann sich die generische Gerätebeschreibung sowohl auf Sensoren als auch auf Aktoren beziehen.

In diesem Zusammenhang ist es besonders vorteilhaft, die Informationen für den Maskierungsspeicher mit einem Testsystem zu gewinnen und anschließend in den Maskierungsspeicher des eigentlichen Steuerungssystems zu transferieren. Werden beispielsweise alle einer generischen Gerätebeschreibung entnommenen Kommandos getestet, so können darunter auch Kommandos sein, auf die das Feldgerät sofort mit einer Aktion reagiert, wie beispielsweise mit dem Schließen eines Ventils. Diese Aktion kann im laufenden Betrieb der Industrieanlage unerwünscht sein. Ist das Feldgerät jedoch nur mit einem Testsystem gekoppelt, wirken sich eventuell durch die getesteten Kommandos ausgelöste Aktionen nicht auf den Betrieb der Industrieanlage aus. Die gewonnene Erkenntnis über die unterstützten Kommandos, die im Maskierungsspeicher des Testsystems abgelegt wird, ist für alle Feldgeräte des gleichen Typs gültig.

In einer weiteren vorteilhaften Ausgestaltung der Erfindung ist die Analyseeinheit zusätzlich dazu ausgebildet, zu prüfen, ob ein nicht unterstütztes Kommando vom Standard des Feldbusprotokolls als "verpflichtend zu unterstützendes" Kommando definiert ist, und gegebenenfalls einen Fehler zu melden. Auf diese Weise kann zum Einen ein Defekt des Feldgeräts, der eine bestimmte Funktionalität betrifft und bei Benutzung dieser Funktionalität eine Fehlermeldung hervorruft, erkannt werden. Zum Anderen kann auch überprüft werden, ob das Feldgerät noch zum Standard des Feldbusprotokolls in seiner aktuellen Fassung konform ist. Feldgeräte können sehr langlebig sein, insbesondere, wenn es sich beispielsweise um Sensoren handelt, die keine beweglichen Teile aufweisen. Ihre Lebensdauer kann länger sein als der Zyklus, in dem der Standard des Feldbusprotokolls überarbeitet wird. Somit kann der Fall eintreten, dass das Feldgerät zum Installationszeitpunkt zum Standard konform ist, aber bei einer späteren Überarbeitung des Standards beispielsweise ein bislang optional zu unterstützendes Kommando nunmehr als "verpflichtend zu unterstützen" festgeschrieben wird. Wenn das Feldgerät dieses Kommando nicht unterstützt, rutscht es, ohne dass sich am Feldgerät selbst etwas ändert, aus der Konformität mit dem Standard heraus, so dass es ausgetauscht werden müsste. Durch die entsprechende Prüfung mittels der Analyseeinheit kann detektiert werden, ob ein solcher Austausch unterblieben ist. Damit kann eine Quelle für ansonsten schwer zu lokalisierende Fehlfunktionen erkannt und beseitigt werden.

In einer besonders vorteilhaften Ausgestaltung der Erfindung ist das Steuerungs- oder Testsystem dazu ausgebildet, vor dem Übertragen eines im Befehlsspeicher hinterlegten Kommandos zum Feldgerät zu prüfen, ob das Kommando als nicht unterstütztes Kommando im Maskierungsspeicher hinterlegt ist, und/oder ob eine diesbezügliche Fehlermeldung im Maskierungsspeicher hinterlegt ist. Gegebenenfalls unterdrückt das System die Übertragung des Kommandos zum Feldgerät. Auf diese Weise wird vermieden, dass durch das Senden nicht unterstützter Kommandos an das Feldgerät Fehler hervorgerufen werden.

Auch in diesem Zusammenhang ist es besonders vorteilhaft, die Informationen für den Maskierungsspeicher mit einem Testsystem zu gewinnen und anschließend in den Maskierungsspeicher des eigentlichen Steuerungssystems zu transferieren. Bei der Ermittlung der nicht unterstützten Kommandos durch Testen aller gemäß Befehlsspeicher verfügbaren Kommandos werden zwangsläufig Fehlermeldungen erzeugt. Wird dieser Test in einer vernetzten Industrieanlage durchgeführt, gelangen diese Fehlermeldungen möglicherweise anderen Steuerungskomponenten zu Ohren und lösen dort eine unerwünschte Reaktion, wie beispielsweise eine Sicherheitsabschaltung, aus. Dies ist im Vorhinein schwer zu überblicken. Daher ist es nur eingeschränkt möglich, andere Steuerungskomponenten auf das plötzliche gehäufte Auftreten von Fehlermeldungen vorzubereiten.

Optional kann ein lesendes Kommando, dessen Übermittlung an das Feldgerät unterdrückt wurde, in der Konfigurationssoftware markiert werden, und/oder es kann auf andere Weise zurückgemeldet werden, dass das Lesen nicht ausgeführt wurde. Damit kann verhindert werden, dass das Steuerungssystem mit einem unbestimmten Wert, den es vom Feldgerät gelesen zu haben glaubt, weiterrechnet und hierbei unsinnige Ergebnisse erhält.

In einer weiteren besonders vorteilhaften Ausgestaltung der Erfindung ist das Steuerungs- oder Testsystem dazu ausgebildet, den Befehlsspeicher um diejenigen Kommandos zu bereinigen, die im Maskierungsspeicher hinterlegt sind, und/oder die zur Hinterlegung einer Fehlermeldung im Maskierungsspeicher geführt haben. Dann ist es zur Vermeidung von Fehlern nicht mehr erforderlich, vor jedem Aufruf eines Kommandos aus dem Befehlsspeicher zusätzlich den Maskierungsspeicher abzufragen, was einen Performancegewinn bewirkt. Weiterhin kann der bereinigte Inhalt des Befehlsspeichers beispielsweise verwendet werden, um eine neue, für den Typ des Feldgeräts spezifische, Gerätebeschreibung zu erstellen.

Der Befehlsspeicher kann neben den über das Feldbusprotokoll zum Feldgerät übertragbaren Kommandos insbesondere beispielsweise auch abstrakte Kommandos in der Sprache der Gerätebeschreibung enthalten. Die Argumente dieser abstrakten Kommandos können im Kontext der Gerätebeschreibung vergebene Parameternamen beinhalten, die durch die Gerätebeschreibung auf die physischen Parameter des Feldgeräts abgebildet werden. Die Bereinigung des Befehlsspeichers kann sich dann auch beispielsweise auf die Liste der Parameternamen auswirken. Wird beispielsweise vom Feldgerät nur ein Kommando zum Lesen des Parameters unterstützt, nicht jedoch ein Kommando zum Schreiben dieses Parameters, kann der entsprechende Parametername als "nur lesbar, aber nicht schreibbar" markiert werden. Wird vom Feldgerät weder ein Kommando zum Schreiben eines konkreten Parameters noch ein Kommando zum Lesen dieses Parameters unterstützt, kann der entsprechende Parametername komplett entfernt werden.

In einer weiteren besonders vorteilhaften Ausgestaltung der Erfindung ist das Steuerungs- oder Testsystem dazu ausgebildet, vor der Ausgabe oder Protokollierung einer Fehlermeldung zu prüfen, ob die Fehlermeldung im Maskierungsspeicher hinterlegt ist und/oder auf ein im Maskierungsspeicher hinterlegtes nicht unterstütztes Kommando zurückgeht. Gegebenenfalls wird die Ausgabe oder Protokollierung der Fehlermeldung unterdrückt.

Werden nicht unterstützte Kommandos an das Feldgerät gesendet, kommt es somit noch zu Fehlermeldungen, jedoch werden die Auswirkungen dieser Fehlermeldungen auf die Übersicht über den Status der Feldgeräte eingedämmt. Die Vorgehensweise, Fehler zunächst zuzulassen und erst im Nachhinein Fehlermeldungen zu klassifizieren, hat den Vorteil, dass nicht in den eigentlichen Kontrollfluss des Steuerungssystems eingegriffen werden muss.

Die Klassifizierung und Filterung der Fehlermeldungen muss nicht zwangsläufig vor deren erster Protokollierung erfolgen. Beispielsweise können alle Fehlermeldungen zunächst in einem Protokoll gesammelt und erst bei der Ausgabe an den Benutzer daraufhin überprüft werden, ob sie vom Senden eines nicht unterstützten Kommandos an das Feldgerät herrührt. Auf diese Weise wird die Information, wie oft ein nicht unterstütztes Kommando nachgefragt wird, nicht vollständig verworfen. Diese Information ist zwar für die Überwachung des laufenden Betriebs der Industrieanlage zweitrangig. Wird jedoch ein bestimmtes nicht unterstütztes Kommando gehäuft nachgefragt, so kann dies als Signal dafür gewertet werden, dass das Feldgerät mittelfristig gegen ein höherwertiges getauscht werden sollte, das auch das gehäuft nachgefragte zusätzliche Kommando unterstützt.

In einer besonders vorteilhaften Ausgestaltung der Erfindung ist das Feldbusprotokoll ein HART-Protokoll gemäß der Feldbus-Norm IEC 61158. Die überwiegende Mehrzahl der heutigen Feldgeräte kommuniziert per HART-Protokoll. HART ist ein bidirektionales Datentransferprotokoll, das den Zugriff auf die Daten von intelligenten Feldsystemen und deren Hostsystemen erlaubt. Ein Host kann dabei jede Anwendung sein, vom Handheld des Wartungspersonals über einen Laptop bis hin zu Steuerungen, Leitsystemen mit Asset-Management-Funktionen sowie Sicherheits- und anderen Systemen.

Die HART-Spezifikation definiert drei verschiedene Klassen von Kommandos:
- "Universal" - Diese Kommandos müssen von jedem HART-konformen Gerät in vollem Umfang gemäß festgelegter Spezifikation unterstützt werden.
- "Common Practice" - Insoweit diese Kommandos vom Feldgerät unterstützt werden, ist eine festgelegte Spezifikation einzuhalten. Es ist jedoch optional, ob ein Feldgerät diese Kommandos unterstützt.
- "Device Specific" - Diese Kommandos sind durch den Hersteller des Feldgeräts frei definierbar. Sie variieren somit auch bei Geräten gleicher Funktion von Hersteller zu Hersteller.

Diese Aufteilung der Spezifikation ermöglicht es, generische Gerätebeschreibungen (auch Universal-Gerätebeschreibungen genannt) aufzustellen, die für die meisten der heutigen HART-Feldgeräte benutzt werden können. Diese generischen Gerätebeschreibungen sind feldgerät- und herstellerunabhängig und basieren typischerweise auf den HART-Kommandos der Klassen "Universal" und "Common Practice". Dabei sind alle Kommandos der Klasse "Universal" implementiert, in der Regel jedoch nur eine Teilmenge der Kommandos der Klasse "Common Practice".

Die generische Gerätebeschreibung kann in der Feldgeräte-Konfigurationssoftware insbesondere benutzt werden, um mit Feldgeräten zu kommunizieren, für die keine vom Hersteller gelieferte Gerätebeschreibung vorhanden ist. Es kann aber beispielsweise auch sinnvoll sein, eine solche generische Beschreibung durchgängig in einer Industrieanlage zu verwenden, um ein Nebeneinander zu vieler verschiedener Gerätebeschreibungen zu vermeiden.

Die meisten der heutigen HART-Feldgeräte können auch dann ihre wesentliche Funktion erfüllen, wenn zu ihrer Ansteuerung ausschließlich HART-Kommandos der Klassen "Universal" und "Common Practice" verwendet werden. Somit können diese Geräte auch ohne herstellerspezifische Gerätebeschreibung in Betrieb genommen werden.

In einer weiteren besonders vorteilhaften Ausgestaltung der Erfindung ist die Gerätebeschreibung eine elektronische Gerätebeschreibung, EDD, gemäß der Electronic Device Description Language, EDDL, und/oder eine Gerätebeschreibung nach dem Foundation Field Bus-Standard, CFF. Gerade eine EDD zeichnet sich dadurch aus, dass sie eine abstrakte Beschreibung in einer Textform mit einer vorgegebenen Syntax ist und keinen ausführbaren Programmcode enthält. Somit kann eine EDD plattformunabhängig genutzt und auch manipuliert werden. Beispielsweise kann eine EDD sowohl von einem Testsystem, das die Informationen für den Maskierungsspeicher ermittelt, als auch später vom eigentlichen Steuerungssystem genutzt werden. Dabei kann die EDD auch mit den gewonnenen Informationen für den Maskierungsspeicher modifiziert werden. Die im Maskierungsspeicher des Testsystems hinterlegte Information kann dann beispielsweise dem eigentlichen Steuerungssystem über die EDD zugeführt werden, so dass das Steuerungssystem diese Information nutzen kann, ohne selbst einen Maskierungsspeicher zu benötigen.

Allgemein bezieht sich die Erfindung somit auch auf ein Verfahren zum Betreiben eines Steuerungs- oder Testsystems. Dieses Verfahren zeichnet sich dadurch aus, dass dem Parser eine für den Standard des Feldbusprotokolls generische Gerätebeschreibung zugeführt wird, die alle gemäß dem Standard als "verpflichtend zu unterstützen" definierten Kommandos sowie mindestens ein gemäß dem Standard als "optional zu unterstützen" definiertes Kommando enthält.

In einer weiteren besonders vorteilhaften Ausgestaltung der Erfindung wird nach dem zuvor Gesagten aus der Gerätebeschreibung und dem Inhalt des Maskierungsspeichers eine spezifische Gerätebeschreibung generiert, die nur solche Kommandos enthält, welche vom Feldgerät unterstützt werden.

Das Steuerungs- oder Testsystem sowie das Verfahren gemäß der Erfindung können insbesondere ganz oder teilweise computerimplementiert sein. Insbesondere kann die Analyseeinheit computerimplementiert sein. Daher bezieht sich die Erfindung auch auf ein Computerprogrammprodukt mit maschinenlesbaren Anweisungen, die, wenn sie von einem Computer und/oder einem Steuergerät ausgeführt werden, den Computer bzw. das Steuergerät zu einem Steuerungs- oder Testsystem, und/oder zu einer Analyseeinheit, ausbilden. Alternativ oder auch in Kombination hierzu können die maschinenlesbaren Anweisungen den Computer bzw. das Steuergerät auch dazu veranlassen, ein Verfahren gemäß der Erfindung auszuführen.

### Spezieller Beschreibunasteil

Nachfolgend wird der Gegenstand der Erfindung anhand von Figuren erläutert, ohne dass der Gegenstand der Erfindung hierdurch beschränkt wird. Es ist gezeigt:
- Figur 1:: Schematischer Aufbau eines Ausführungsbeispiels eines Steuerungs- oder Testsystems 3 gemäß der Erfindung.
- Figur 2:: Alternative Kontrollflüsse zur Vermeidung unnötiger Fehlermeldungen 12b.
- Figur 3:: Generierung 300 einer gerätespezifischen Gerätebeschreibung 2a aus einer generischen Gerätebeschreibung 2.

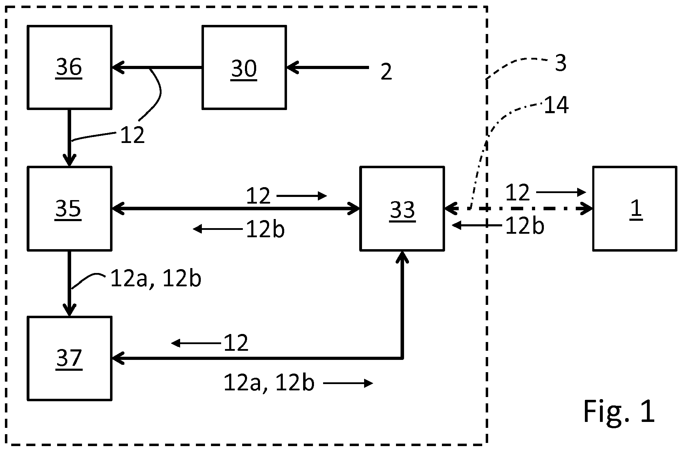

Figur 1 zeigt ein Ausführungsbeispiel eines Steuerungs- oder Testsystems **3,** das über eine Vermittlungseinheit **33** und ein Feldbusprotokoll **14** bidirektional mit einem Feldgerät **1** kommuniziert. Das System **3** verfügt über einen Parser **30,** der aus einer Gerätebeschreibung **2,** etwa einer EDD, die verfügbaren Kommandos **12** extrahiert und im Befehlsspeicher **36** hinterlegt.

Eine Analyseeinheit **35** testet sukzessive alle im Befehlsspeicher **36** hinterlegten Kommandos **12,** indem sie ein jedes dieser Kommandos **12** vermittelt durch die Vermittlungseinheit **33** über das Feldbusprotokoll **14** an das Feldgerät **1** sendet und prüft, ob das Feldgerät **1** daraufhin eine Fehlermeldung **12b** zurückgibt. Trifft eine solche Fehlermeldung **12b** ein, wird das Kommando **12,** das zu der Fehlermeldung **12b** Anlass gegeben hat, von der Analyseeinheit **35** als nicht unterstütztes Kommando **12a** im Maskierungsspeicher **37** des Systems **3** hinterlegt. Alternativ oder auch in Kombination wird die Fehlermeldung **12b** im Maskierungsspeicher **37** hinterlegt.

Die Vermittlungseinheit **33** vermittelt die Kommunikation aller Funktionseinheiten des Steuerungssystems **3** mit dem Feldgerät **1.** Diese weiteren Funktionseinheiten, wie etwa eine Bedienoberfläche und eine Geschäftslogik, sind der Übersichtlichkeit halber in Figur 1 nicht eingezeichnet. Wenn die Vermittlungseinheit **33** ein Kommando **12** empfängt, übermittelt sie dieses Kommando **12** nicht sofort über das Feldbusprotokoll **14** an das Feldgerät **1,** sondern fragt zunächst im Maskierungsspeicher **37** ab, ob dort entweder das Kommando **12** dort als nicht unterstütztes Kommando **12a** hinterlegt ist und/oder ob dort eine von dem Kommando **12** herrührende Fehlermeldung **12b** hinterlegt ist. Gegebenenfalls unterdrückt die Vermittlungseinheit **33** die Übermittlung des Kommandos **12** zum Feldgerät **1.** Auf diese Weise wird vermieden, dass unnötige Fehlermeldungen **12b** erzeugt werden.

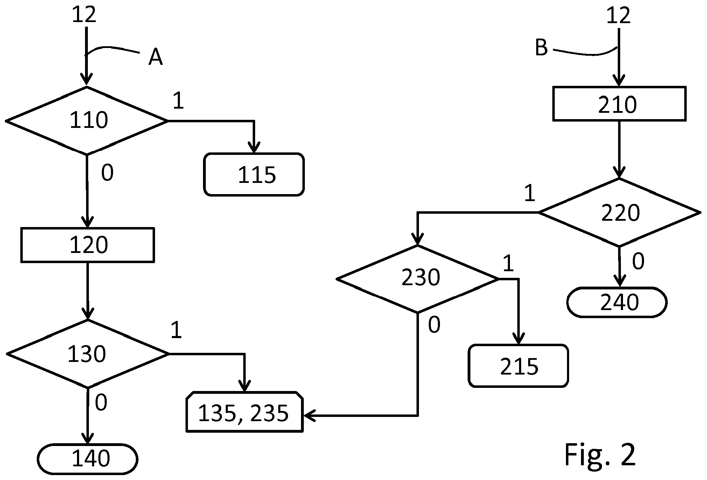

Figur 2 zeigt zwei alternative Kontrollflüsse **A** und **B,** über die vermieden werden kann, dass in einem Steuerungssystem **3** durch das Senden nicht unterstützter Kommandos **12a** an ein Feldgerät **1** unnötige Fehlermeldungen **12b** anfallen. Ausgangspunkt ist jeweils ein Kommando **12,** das an das Feldgerät **1** übermittelt werden soll.

Gemäß dem Kontrollfluss **A** wird im Schritt **110** zunächst überprüft, ob das Kommando **12** als nicht unterstütztes Kommando **12a** im Maskierungsspeicher **37** hinterlegt ist, und/oder ob eine von dem Kommando **12** herrührende Fehlermeldung **12b** im Maskierungsspeicher **37** hinterlegt ist. Gegebenenfalls (Wahrheitswert 1) wird im Schritt 115 die Übermittlung des Kommandos **12** an das Feldgerät **1** unterdrückt. Auf diese Weise wird vermieden, dass unnötige weitere Fehlermeldungen **12b** anfallen.

Wurde das Kommando **12** im Schritt **110** nicht als ein nicht unterstütztes Kommando **12a** erkannt (Wahrheitswert 0), wird es im Schritt **120** an das Feldgerät **1** übermittelt. Anschließend wird im Schritt **130** geprüft, ob das Feldgerät **1** eine Fehlermeldung **12b** zurückgegeben hat. Ist dies der Fall (Wahrheitswert 1), kann diese Fehlermeldung **12b** nicht dadurch verursacht worden sein, dass das Kommando **12** ein nicht unterstütztes Kommando **12a** ist. Vielmehr muss Ursache der Fehlermeldung **12b** sein, dass bei der an sich im Feldgerät **1** vorgesehenen Ausführung des Kommandos **12** ein Problem aufgetreten ist. Daher wird die Fehlermeldung **12b** im Schritt **135** ausgegeben und/oder protokolliert. Wird hingegen im Schritt **130** keine Fehlermeldung **12b** festgestellt (Wahrheitswert 0), so wird der Kontrollfluss **A** mit dem Schritt **140** als erfolgreich abgeschlossen.

Gemäß dem Kontrollfluss **B** wird das Kommando **12** im Schritt **210** an das Feldgerät **1** übermittelt. Anschließend wird im Schritt **220** geprüft, ob das Feldgerät **1** eine Fehlermeldung **12b** zurückgegeben hat. Ist dies der Fall (Wahrheitswert 1), wird im Schritt **230** geprüft, ob die Fehlermeldung **12b** im Maskierungsspeicher **37** hinterlegt ist und/oder ob das Kommando **12** als nicht unterstütztes Kommando **12a** im Maskierungsspeicher **37** hinterlegt ist. Ist dies der Fall (Wahrheitswert 1), wird im Schritt **215** die Ausgabe und/oder die Protokollierung der Fehlermeldung **12b** unterdrückt.

Hat das Feldgerät **1** eine Fehlermeldung **12b** zurückgegeben (Wahrheitswert 1 bei Schritt **220**), ist aber weder das Kommando **12** noch die Fehlermeldung **12b** im Maskierungsspeicher **37** hinterlegt (Wahrheitswert 0 bei Schritt **230**), so ist die Fehlermeldung **12b** nicht darauf zurückzuführen, dass das Kommando **12** vom Feldgerät **1** nicht unterstützt wird. Vielmehr ist bei der an sich im Feldgerät **1** vorgesehenen Ausführung des Kommandos **12** ein Problem aufgetreten. Daher wird, analog zur entsprechenden Situation im Kontrollfluss **A,** die Fehlermeldung **12** im Schritt **235** ausgegeben und/oder protokolliert.

Wurde im Schritt **220** keine Fehlermeldung festgestellt (Wahrheitswert 0), wird der Kontrollfluss **B** mit dem Schritt **240** als erfolgreich abgeschlossen.

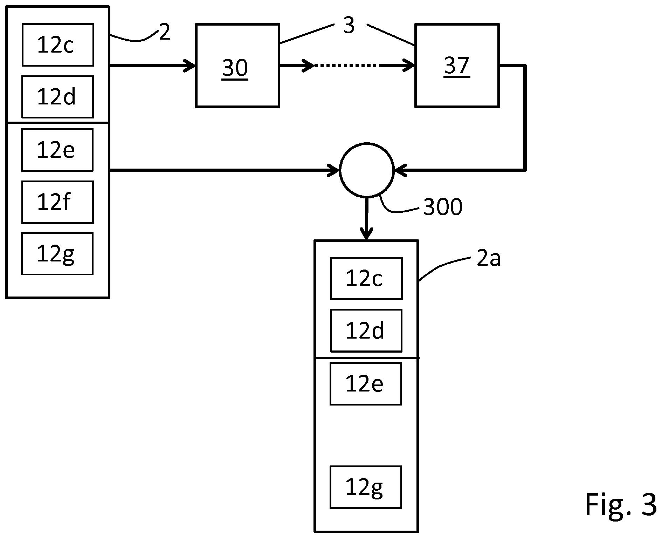

Figur 3 verdeutlicht an einem Beispiel die Generierung **300** einer gerätespezifischen Gerätebeschreibung **2a** aus einer generischen Gerätebeschreibung **2.** Die generische Gerätebeschreibung **2,** beispielsweise eine generische HART-EDD, enthält fünf Kommandos **12c-12g.** Die Kommandos **12c** und **12d** gehören zur Klasse "Universal" der HART-Kommandos, müssen also von jedem Feldgerät **1,** das zum HART-Standard konform ist, unterstützt werden. Die Kommandos **12e, 12f** und **12g** gehören zur Klasse "Common Practice", sind also definiert, müssen aber nicht zwingend von jedem Feldgerät **1** implementiert werden.

Die Gerätebeschreibung **2** wird einem Testsystem **3** zugeführt, das analog zu Figur 1 aufgebaut ist. Aus Gründen der Übersichtlichkeit sind in Figur 3 nur der eingangsseitige Parser **30** sowie der Maskierungsspeicher **37,** dessen Inhalt weiterverwendet wird, eingezeichnet.

Die Prüfung aller Kommandos **12c-12g** ergibt in dem in Figur 3 gezeigten Beispiel, dass das Feldgerät **1** alle Kommandos **12** bis auf das Kommando **12f** unterstützt. Dementsprechend wird dieses Kommando **12f** als nicht unterstütztes Kommando **12a** im Maskierungsspeicher **37** hinterlegt.

Die ursprüngliche generische Gerätebeschreibung **2** und der Inhalt des Maskierungsspeichers **37** werden im Schritt **300** miteinander verrechnet, um die gerätespezifische Gerätebeschreibung **2a** zu generieren. Das Ergebnis ist, dass das vom Feldgerät **1** nicht unterstützte Kommando **12f** nicht mehr in der gerätespezifischen Gerätebeschreibung **2a** enthalten ist.

Die gerätespezifische Gerätebeschreibung **2a** kann anschließend beispielsweise auf ein Steuerungssystem **3** eingespielt werden, um sicherzustellen, dass dieses Steuerungssystem **3** ausschließlich vom Feldgerät **1** unterstützte Kommandos **12** an das Feldgerät **1** übermittelt. Da das nicht unterstützte Kommando **12f** in der Gerätebeschreibung **2a** fehlt, hat das Steuerungssystem **3** keinerlei Veranlassung, dieses an das Feldgerät **1** zu übermitteln.

### Bezugszeichenliste

- 1: Feldgerät
- 2: Gerätebeschreibung
- 2a: gerätespezifische Fassung der Gerätebeschreibung 2
- 3: Steuerungs- oder Testsystem
- 12: Kommando
- 12a: vom Feldgerät 1 nicht unterstütztes Kommando 12
- 12b: Fehlermeldung vom Feldgerät 1
- 12c, 12d: gemäß Feldbusprotokoll 14 verpflichtend unterstützte Kommandos 12
- 12e-12g: gemäß Feldbusprotokoll 14 optional unterstützte Kommandos 12
- 14: Feldbusprotokoll
- 30: Parser des Systems 3
- 33: Vermittlungseinheit des Systems 3
- 35: Analyseeinheit des Systems 3
- 36: Befehlsspeicher des Systems 3
- 37: Maskierungsspeicher des Systems 3
- 110, 230: Prüfung, ob Kommando 12 als "nicht unterstützt" bekannt
- 115: Unterdrückung der Übermittlung 120
- 120, 210: Übermittlung des Kommandos 12 an das Feldgerät 1
- 130, 220: Prüfung, ob Feldgerät 1 Fehlermeldung 12b abgegeben hat
- 135, 235: Ausgabe und/oder Protokollierung der Fehlermeldung 12b
- 140, 240: erfolgreicher Abschluss des Kontrollflusses A bzw. B
- 215: Unterdrückung der Fehlermeldung 12b
- 300: Generierung der gerätespezifischen Gerätebeschreibung 2a
- A, B: Kontrollflüsse

## Patentansprüche

1. Steuerungs- oder Testsystem (3) für ein Feldgerät (1), wobei die verfügbaren Kommandos und Parameter des Feldgeräts (1) in einer elektronischen Gerätebeschreibung gespeichert sind [S. 1, Abs. 2], umfassend eine Vermittlungseinheit (33) zur bidirektionalen Kommunikation mit dem Feldgerät (1) über ein Feldbusprotokoll (14), weiterhin umfassend einen Befehlsspeicher (36), der zur Aufnahme von über das Feldbusprotokoll (14) zum Feldgerät (1) übertragbaren Kommandos (12) ausgebildet ist,
**dadurch gekennzeichnet,**
**dass** zusätzlich ein Maskierungsspeicher (37) vorgesehen ist, der zur Aufnahme derjenigen im Befehlsspeicher (36) enthaltenen Kommandos (12a), die vom Feldgerät (1) nicht unterstützt werden, und/oder zur Aufnahme einer vom Feldgerät (1) in Reaktion auf ein derartiges Kommando (12a) zurückgemeldeten Fehlermeldung (12b), ausgebildet ist, wobei zusätzlich ein Parser (30) vorgesehen ist, der dazu ausgebildet ist, die zum Feldgerät (1) übertragbaren Kommandos (12) aus einer Gerätebeschreibung (2) zu extrahieren und im Befehlsspeicher (36) zu hinterlegen, und wobei der Parser (30) eine für den Standard des Feldbusprotokolls (14) generische Gerätebeschreibung (2) aufweist, die alle gemäß dem Standard als "verpflichtend zu unterstützen" definierten Kommandos (12c, 12d) sowie mindestens ein gemäß dem Standard als "optional zu unterstützen" definiertes Kommando (12e-12g) enthält.

2. Steuerungs- oder Testsystem (3) nach einem der Ansprüche 1,
**dadurch gekennzeichnet,**
**dass** zusätzlich eine Analyseeinheit (35) vorgesehen ist, die dazu ausgebildet ist, im Befehlsspeicher (36) hinterlegte Kommandos (12) über das Feldbusprotokoll (14) an das Feldgerät (1) zu senden und bei Erhalt einer Fehlermeldung (12b) vom Feldgerät (1) das Kommando (12) als vom Feldgerät (1) nicht unterstütztes Kommando (12a) im Maskierungsspeicher (37) zu hinterlegen, und/oder die die Fehlermeldung (12b) im Maskierungsspeicher (37) zu hinterlegen.

3. Steuerungs- oder Testsystem (3) nach Anspruch 2,
**dadurch gekennzeichnet,**
**dass** die Analyseeinheit (35) zusätzlich dazu ausgebildet ist, zu prüfen, ob ein nicht unterstütztes Kommando (12a) vom Standard des Feldbusprotokolls (14) als "verpflichtend zu unterstützendes" Kommando (12c, 12d) definiert ist, und gegebenenfalls einen Fehler zu melden.

4. Steuerungs- oder Testsystem (3) nach einem der Ansprüche 1 bis 3,
**dadurch gekennzeichnet,**
**dass** es dazu ausgebildet ist, vor dem Übertragen eines im Befehlsspeicher (36) hinterlegten Kommandos (12) zum Feldgerät (1) zu prüfen, ob das Kommando (12) als nicht unterstütztes Kommando (12a) im Maskierungsspeicher (37) hinterlegt ist, und/oder ob eine diesbezügliche Fehlermeldung (12b), im Maskierungsspeicher (37) hinterlegt ist, und gegebenenfalls die Übertragung des Kommandos (12) zum Feldgerät (1) zu unterdrücken.

5. Steuerungs- oder Testsystem (3) nach einem der Ansprüche 1 bis 4,
**dadurch gekennzeichnet,**
**dass** es dazu ausgebildet ist, den Befehlsspeicher (36) um diejenigen Kommandos (12a) zu bereinigen, die im Maskierungsspeicher (37) hinterlegt sind, und/oder die zur Hinterlegung einer Fehlermeldung (12b) im Maskierungsspeicher (37) geführt haben.

6. Steuerungs- oder Testsystem (3) nach einem der Ansprüche 1 bis 5,
**dadurch gekennzeichnet,**
**dass** es dazu ausgebildet ist, vor der Ausgabe oder Protokollierung einer Fehlermeldung (12b) zu prüfen, ob die Fehlermeldung (12b) im Maskierungsspeicher (37) hinterlegt ist und/oder auf ein im Maskierungsspeicher (37) hinterlegtes nicht unterstütztes Kommando (12a) zurückgeht, und gegebenenfalls die Ausgabe oder Protokollierung der Fehlermeldung (12b) zu unterdrücken.

7. Steuerungs- oder Testsystem (3) nach einem der Ansprüche 1 bis 6,
**dadurch gekennzeichnet,**
**dass** das Feldbusprotokoll (14) ein HART-Protokoll gemäß der Feldbus-Norm IEC 61158 ist.

8. Steuerungs- oder Testsystem (3) nach Anspruch 2 sowie optional einem der Ansprüche 3 bis 7,
**dadurch gekennzeichnet,**
**dass** die Gerätebeschreibung (2) eine elektronische Gerätebeschreibung, EDD, gemäß der Electronic Device Description Language, EDDL, und/oder eine Gerätebeschreibung nach dem Foundation Field Bus-Standard, CFF, ist.

9. Verfahren zum Betreiben eines Steuerungs- oder Testsystems (3) für ein Feldgerät (1), bei welchem die verfügbaren Kommandos und Parameter des Feldgeräts (1) in einer elektronischen Gerätebeschreibung gespeichert werden, wobei durch eine Vermittlungseinheit (33) eine bidirektionale Kommunikation mit dem Feldgerät (1) über ein Feldbusprotokoll (14) durchgeführt wird, wobei durch einen Befehlsspeicher (36) die von über das Feldbusprotokoll (14) zum Feldgerät (1) übertragbaren Kommandos (12) aufgenommen werden,
**dadurch gekennzeichnet,**
**dass** von einen zusätzlichen Maskierungsspeicher (37) diejenigen im Befehlsspeicher (36) enthaltenen Kommandos (12a) aufgenommen werden, die vom Feldgerät (1) nicht unterstützt werden, und/oder hiervon eine vom Feldgerät (1) in Reaktion auf ein derartiges Kommando (12a) zurückgemeldete Fehlermeldung (12b) aufgenommen wird, wobei
durch einen zusätzlichen Parser (30) die zum Feldgerät (1) übertragbaren Kommandos (12) aus einer Gerätebeschreibung (2) extrahiert werden und im Befehlsspeicher (36) hinterlegt werden, wobei
dem Parser (30) eine für den Standard des Feldbusprotokolls (14) generische Gerätebeschreibung (2) zugeführt wird, die alle gemäß dem Standard als "verpflichtend zu unterstützen" definierten Kommandos (12c, 12d) sowie mindestens ein gemäß dem Standard als "optional zu unterstützen" definiertes Kommando (12e-12g) enthält.

10. Verfahren nach Anspruch 9,
**dadurch gekennzeichnet,**
**dass** aus der Gerätebeschreibung (2) und dem Inhalt des Maskierungsspeichers (37) eine spezifische Gerätebeschreibung (2a) generiert wird (300), die nur solche Kommandos (12c, 12d, 12e, 12g) enthält, welche vom Feldgerät (1) unterstützt werden.

11. Computerprogramm mit Programmmitteln, welche, wenn sie auf einem Prozessor eines Computers ausgeführt werden, alle Schritte des Verfahrens nach Anspruch 9 oder 10 ausführen.

## Claims

1. Control or test system (3) for a field device (1), wherein the available commands and parameters of the field device (1) are stored in an electronic device description [page 1, paragraph 2], comprising a communicating unit (33) for communicating with the field device (1) in a bidirectional manner using a field bus protocol (14), also comprising a command memory (36) which is designed to hold commands (12) which can be transmitted to the field device (1) using the field bus protocol (14).

2. Control or test system (3) according to Claim 1, **characterized**
**in that** an analysis unit (35) is additionally provided and is designed to transmit commands (12) stored in the command memory (36) to the field device (1) using the field bus protocol (14) and, upon receiving an error message (12b) from the field device (1), to store the command (12) in the masking memory (37) as a command (12a) which is not supported by the field device (1) and/or to store the error message (12b) in the masking memory (37).

3. Control or test system (3) according to Claim 2, **characterized**
**in that** the analysis unit (35) is additionally designed to check whether an unsupported command (12a) is defined by the standard of the field bus protocol (14) as a "support mandatory" command (12c, 12d) and to report an error, if appropriate.

4. Control or test system (3) according to one of Claims 1 to 3,
**characterized**
**in that** it is designed to check, before transmitting a command (12) stored in the command memory (36) to the field device (1), whether the command (12) is stored in the masking memory (37) as an unsupported command (12a) and/or whether a relevant error message (12b) is stored in the masking memory (37) and to suppress the transmission of the command (12) to the field device (1), if appropriate.

5. Control or test system (3) according to one of Claims 1 to 4,
**characterized**
**in that** it is designed to purge the command memory (36) of those commands (12a) which are stored in the masking memory (37) and/or have resulted in the storage of an error message (12b) in the masking memory (37).

6. Control or test system (3) according to one of Claims 1 to 5,
**characterized**
**in that** it is designed to check, before outputting or logging an error message (12b),whether the error message (12b) is stored in the masking memory (37) and/or traces back to an unsupported command (12a) stored in the masking memory (37) and to suppress the output or logging of the error message (12b), if appropriate.

7. Control or test system (3) according to one of Claims 1 to 6,
**characterized**
**in that** the field bus protocol (14) is a HART protocol according to the IEC 61158 field bus standard.

8. Control or test system (3) according to Claim 2 and optionally according to one of Claims 3 to 7, **characterized**
**in that** the device description (2) is an electronic device description, EDD, according to the Electronic Device Description Language, EDDL, and/or a device description according to the Foundation field bus standard, CFF.

9. Method for operating a control or test system (3) for a field device (1), in which the available commands and parameters of the field device (1) are stored in an electronic device description, wherein a communicating unit (33) communicates with the field device (1) in a bidirectional manner using a field bus protocol (14), wherein a command memory (36) holds the commands (12) which can be transmitted to the field device (1) using the field bus protocol (14),
**characterized**
**in that** an additional masking memory (37) holds those commands (12a) contained in the command memory (36) which are not supported by the field device (1) and/or holds an error message (12b) reported back by the field device (1) in response to such a command (12a), wherein
an additional parser (30) extracts the commands (12) which can be transmitted to the field device (1) from a device description (2) and stores them in the command memory (36), wherein
the parser (30) is supplied with a device description (2) which is generic for the standard of the field bus protocol (14) and contains all commands (12c, 12d) defined according to the standard as "support mandatory" and at least one command (12e-12g) defined according to the standard as "support optional".

10. Method according to Claim 9,
**characterized**
**in that** a specific device description (2a) which contains only those commands (12c, 12d, 12e, 12g) which are supported by the field device (1) is generated (300) from the device description (2) and the content of the masking memory (37).

11. Computer program having program means which, when executed on a processor of a computer, carry out all of the steps of the method according to Claim 9 or 10.

## Revendications

1. Système de commande et de test (3) pour un appareil de terrain (1), les commandes et les paramètres disponibles de l'appareil de terrain (1) étant mémorisés dans une description d'appareil électronique [P. 1, par. 2], comprenant une unité de transmission (33) servant à la communication bidirectionnelle avec l'appareil de terrain (1) par le biais d'un protocole de bus de terrain (14), comprenant en outre une mémoire d'instructions (36) qui est configurée pour enregistrer des commandes (12) pouvant être transmises à l'appareil de terrain (1) par le biais du protocole de bus de terrain (14), **caractérisé en ce**
**qu'**une mémoire de masquage (37) est en plus présente, laquelle est configurée pour enregistrer les commandes (12a) contenues dans la mémoire d'instructions (36) qui ne sont pas prises en charge par l'appareil de terrain (1), et/ou pour enregistrer un message d'erreur (12b) renvoyé par l'appareil de terrain (1) en réaction à une telle commande (12a), un analyseur syntaxique (30) étant en outre présent, lequel est configuré pour extraire d'une description d'appareil (2) les commandes (12) qui peuvent être transmises à l'appareil de terrain (1) et les stocker dans la mémoire d'instructions (36), et l'analyseur syntaxique (30) possédant une description d'appareil (2) générique pour la norme du protocole de bus de terrain (14), laquelle contient toutes les commandes (12c, 12d) définies comme « à prendre obligatoirement en charge » selon la norme ainsi qu'au moins une commande (12e-12g) définie comme « à prendre facultativement en charge » selon la norme.

2. Système de commande et de test (3) selon l'une des revendications 1, **caractérisé en ce qu'**une unité d'analyse (35) est en plus présente, laquelle est configurée pour envoyer les commandes (12) stockées dans la mémoire d'instructions (36) à l'appareil de terrain (1) par le biais du protocole de bus de terrain (14) et, lors de la réception d'un message d'erreur (12b) de l'appareil de terrain (1), stocker la commande (12) dans la mémoire de masquage (37) en tant que commande (12a) non prise en charge par l'appareil de terrain (1) et/ou stocker le message d'erreur (12b) dans la mémoire de masquage (37).

3. Système de commande et de test (3) selon la revendication 2, **caractérisé en ce que** l'unité d'analyse (35) est en plus configurée pour vérifier si une commande (12a) non prise en charge par la norme du protocole de bus de terrain (14) est définie comme une commande (12c, 12d) « à prendre obligatoirement en charge » et, le cas échéant, signaler une erreur.

4. Système de commande et de test (3) selon l'une des revendications 1 à 3, **caractérisé en ce qu'**il est configuré pour, avant de transmettre à l'appareil de terrain (1) une commande (12) stockée dans la mémoire d'instructions (36), vérifier si la commande (12) n'est pas stockée dans la mémoire de masquage (37) en tant que commande (12a) non prise en charge, et/ou si un message d'erreur (12b) la concernant est stocké dans la mémoire de masquage (37) et, le cas échéant, inhiber la transmission de la commande (12) à l'appareil de terrain (1) .

5. Système de commande et de test (3) selon l'une des revendications 1 à 4, **caractérisé en ce qu'**il est configuré pour nettoyer la mémoire d'instructions (36) des commandes (12a) qui sont stockées dans la mémoire de masquage (37) et/ou qui ont entraîné un stockage d'un message d'erreur (12b) dans la mémoire de masquage (37).

6. Système de commande et de test (3) selon l'une des revendications 1 à 5, **caractérisé en ce qu'**il est configuré pour, avant l'émission ou la journalisation d'un message d'erreur (12b), vérifier si le message d'erreur (12b) est stocké dans la mémoire de masquage (37) et/ou renvoie à une commande (12a) non prise en charge stockée dans la mémoire de masquage (37) et, le cas échéant, inhiber l'émission ou la journalisation d'un message d'erreur (12b).

7. Système de commande et de test (3) selon l'une des revendications 1 à 6, **caractérisé en ce que** le protocole de bus de terrain (14) est un protocole HART conforme à la norme de bus de terrain IEC 61158.

8. Système de commande et de test (3) selon la revendication 2 et facultativement aussi selon l'une des revendications 3 à 7, **caractérisé en ce que** la description d'appareil (2) est une description d'appareil électronique, EDD, selon le langage de description d'appareil électronique, EDDL, et/ou une description d'appareil selon la norme de bus de terrain de fondation, CFF.

9. Procédé pour faire fonctionner un système de commande et de test (3) pour un appareil de terrain (1), avec lequel les commandes et les paramètres disponibles de l'appareil de terrain (1) sont mémorisés dans une description d'appareil électronique, une communication bidirectionnelle avec l'appareil de terrain (1) étant réalisée par une unité de transmission (33) par le biais d'un protocole de bus de terrain (14), les commandes (12) pouvant être transmises à l'appareil de terrain (1) par le biais du protocole de bus de terrain (14) étant enregistrées par mémoire d'instructions (36), **caractérisé en ce**
**que** les commandes (12a) contenues dans la mémoire d'instructions (36) qui ne sont pas prises en charge par l'appareil de terrain (1) sont enregistrées par une mémoire de masquage (37) supplémentaire, et/ou un message d'erreur (12b) renvoyé par l'appareil de terrain (1) en réaction à une telle commande (12a) est enregistré par celle-ci, les commandes (12) qui peuvent être transmises à l'appareil de terrain (1) étant extraites d'une description d'appareil (2) par un analyseur syntaxique (30) et stockées dans la mémoire d'instructions (36), une description d'appareil (2) générique pour la norme du protocole de bus de terrain (14) étant acheminée à l'analyseur syntaxique (30), laquelle contient toutes les commandes (12c, 12d) définies comme « à prendre obligatoirement en charge » selon la norme ainsi qu'au moins une commande (12e-12g) définie comme « à prendre facultativement en charge » selon la norme.

10. Procédé selon la revendication 9, **caractérisé en ce qu'**une description d'appareil spécifique (2a) est générée (300) à partir de la description d'appareil (2) et du contenu de la mémoire de masquage (37), laquelle ne contient que les commandes (12c, 12d, 12e, 12g) qui sont prises en charge par l'appareil de terrain (1).

11. Programme informatique comprenant des moyens de programme qui, lorsqu'ils sont exécutés sur un processeur d'un ordinateur, exécutent toutes les étapes du procédé selon la revendication 9 ou 10.
